**Europäisches Patentamt**

**European Patent Office**

**Office européen des brevets**

(11) Veröffentlichungsnummer: **0 223 051**
**B1**

(12) **EUROPÄISCHE PATENTSCHRIFT**

(45) Veröffentlichungstag der Patentschrift:
28.06.89

(21) Anmeldenummer: 86114072.1

(22) Anmeldetag: **10.10.86**

(51) Int. Cl.⁴: **B60K 15/04**

(54) Sicherheitsbelüftung gegen Überfüllung für Kraftstoff-Behälter.

(30) Priorität: 23.10.85 FR 8515743
21.05.86 FR 8607176

(43) Veröffentlichungstag der Anmeldung:
27.05.87 Patentblatt 87/22

(45) Bekanntmachung des Hinweises auf die Patenterteilung:
28.06.89 Patentblatt 89/26

(84) Benannte Vertragsstaaten:
DE ES FR GB IT

(56) Entgegenhaltungen:
AT-A- 313 082
DE-A- 3 205 782
FR-A- 2 372 712
FR-A- 2 581 597
US-A- 3 996 951
US-A- 4 044 913

(73) Patentinhaber: PAUL JOURNEE S.A., 39, Avenue
Marceau, F-92400 Courbevoie(FR)

(72) Erfinder: Journee, Maurice, Le Bois Hédouin Reilly,
F-60240 Chaumont-en-Vexin(FR)
Erfinder: Romanek, Christian, 57, rue de Paris,
F-60430 Noailles(FR)
Erfinder: Percebois, Serge, 13, rue Monet Le Bois
Geloup, F-27140 Gisors(FR)

(74) Vertreter: Patentanwaltsbüro Cohausz & Florack,
Postfach 14 01 20, D-4000 Düsseldorf 1(DE)

## Beschreibung

Die Erfindung bezieht sich auf eine Sicherheits-Belüftungsvorrichtung gegen Überfüllung für Kraftstoffbehälter bei Kraftfahrzeugen, bei denen der Behälter mit der Atmosphäre während des Nichtfüllens über einen Stutzen in Verbindung steht, der in den Behälter und eine darin befindliche Lufttasche mündet, die ein Aufsteigen des Kraftstoffs in diesen Stutzen verhindert, und zu denen ein Absperrventil für den genannten Stutzen gehört.

Es sind Vorrichtungen der genannten Art bekannt, bei denen das Absperrventil für den Stutzen, das ein Überfüllen des Behälters verhindern soll, durch den Verschlußdeckel des Behälters oder einer Schließklappe betätigt wird. Diese bekannten Mittel außerhalb des Kraftstoffbehälters haben eine Komplikation der Betätigung zur Folge. Zudem wird bei Fehlfunktionen (schlecht verschlossener Deckel, aufgebliebene Klappe) der Kraftstoffbehälter nicht belüftet, was äußerst gefährlich ist.

Die Erfindung verfolgt deshalb das Ziel, das Absperrventil für die Verbindung des Behälters mit der freien Luft durch einfache und sichere Mittel während des Füllens zu schließen.

Diese Aufgabe wird erfindungsgemäß dadurch gelöst, daß das genannte Ventil geschlossen wird durch das Einschieben der Zapfpistole in den Füllansatz des Kraftstoffbehälters. Das genannte Ventil wird durch das Einführen der Zapfpistole in den Ansatz zum Einfüllstutzen des Kraftstoffbehälters betätigt. Die erfindungsgemäße Anordnung ist vollständig im Behälter untergebracht, was die Ausführung beträchtlich vereinfacht. Zudem wird beim Herausnehmen der Zapfpistole das Absperrventil nicht mehr betätigt, und der Behälter wird automatisch und sicher wieder mit der Luft in Verbindung gebracht.

Vorzugsweise wird das Absperrventil betätigt durch eine Klappe, die in Drehung fest verbunden ist mit einer Absperr- und Dichtungsklappe des Behälters. In diesem Falle ist vorteilhafter die Betätigungsklappe der Absperr- und Dichtungsklappe an der Drehachse der letzteren angelenkt und wird von einer Feder bis zu einer Anschlagstellung verschoben.

Nach einer Variante der Erfindung, bei der das Absperrventil eine Klappe umfaßt, die durch eine Feder gegen einen Sitz gedrückt wird und einen Stößel aufweist, auf den die Zapfpistole einwirkt, ist die Vorrichtung dadurch gekennzeichnet, daß ein Käfig, mit einer Dichtung versehen, die mit einem Sitz des Belüftungsstutzens zusammenwirkt, gleitend an der genannten Klappe angeordnet ist und eine durch Schwerkraft auf schiefen Ebenen der Klappe sitzende Kugel enthält.

Wenn das Fahrzeug aufrecht steht, stützt sich die Kugel durch Schwerkraft auf den Gleitkäfig und entfernt die von ihm getragene Dichtung vom Sitz des Dichtungsstutzens, der dadurch geöffnet wird. Falls das Fahrzeug umkippt, gleitet die Kugel gegen die eine oder andere schiefe Ebene der Klappe und verschiebt den Käfig, dessen Dichtung gegen den Sitz des Stutzens zu liegen kommt und diesen dadurch absperrt.

Die Erfindung wird besser verständlich beim Lesen der folgenden Beschreibung unter Bezugnahme auf die beigeheftete Zeichnung, in der

– Figur 1 ein schematischer Schnitt in Seitenansicht einer Vorrichtung nach einem Ausführungsbeispiel der Erfindung ist;
– Figur 2 ist eine schematische Schnittansicht einer Absperrvorrichtung nach einer Variante der Erfindung für ein aufrecht stehendes Fahrzeug, und
– Figur 3 ist analog zu Figur 2 eine Darstellung für ein Fahrzeug in geneigter Stellung.

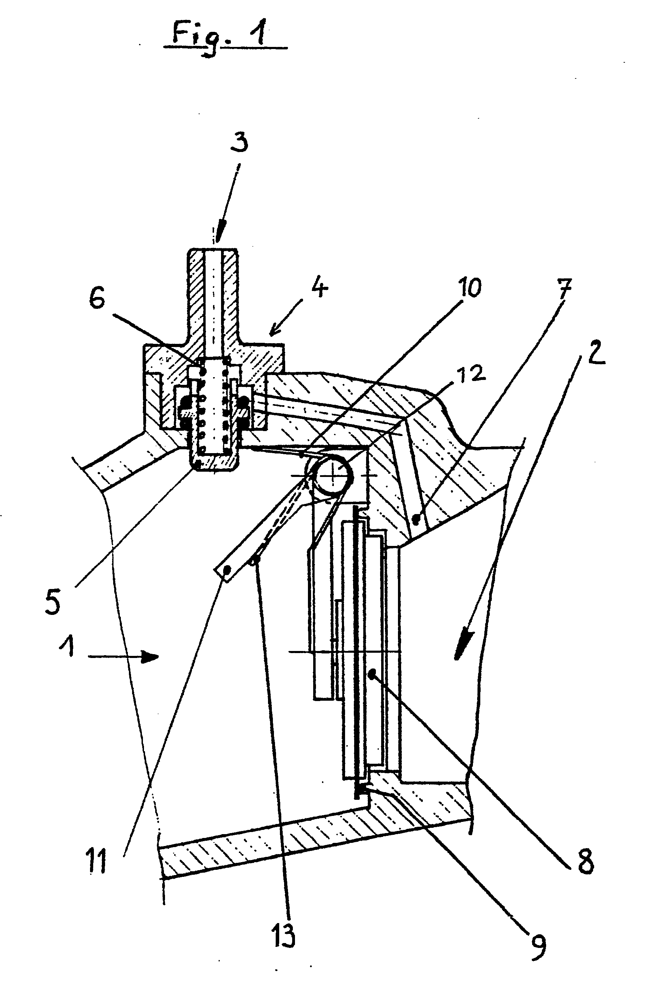

Die in Figur 1 dargestellte Vorrichtung ist über einen Ansatz 2 an einem Einfüllstutzen 1 eines Kraftstoffbehälters (nicht dargestellt) angebracht. Ein Sutzen 3, mit dem Behälter verbunden, ist an ein Ventil 4 mit Schließstößel 5 angeschlossen, der durch eine Feder 6 in Öffnungsstellung gehalten wird. Der Ausgang des Ventils 4 steht über einen Kanal 7 mit der freien Luft in Verbindung, der z.B. in den Ansatz 2 mündet. Eine Klappe 8 durch eine Feder 10 auf einem Sitz 9 gehalten, sperrt normalerweise den Durchgang zwischen dem Ansatz 2 und dem Stutzen 1 dichtend ab. Die Klappe 8 wird durch die Zapfpistole (nicht dargestellt) bei deren Einführung in den Stutzen 1 über den Ansatz 2 zurückgeschoben und ermöglicht das Füllen des Behälters.

Eine Klappe 11, an der Drehachse 12 der Klappe 8 befestigt, wird davon durch einen Schenkel 13 der Feder 10 bis zu einer Anschlagstellung (in der Zeichnung dargestellt) entfernt, in der die Klappe 11 vom Stößel 5 entfernt ist. Im Verlauf der Drehung der Klappe 8 infolge Einschiebens der Zapfpistole drückt die Klappe 8 gegen den Stößel 5 und bewirkt das Schließen des Ventils 4, so daß der Behälter nicht mehr mit der freien Luft in Verbindung steht. Am Ende des Einschubs der Zapfpistole wird die Klappe durch den Schenkel 13 der Feder 10 gegen die Wand des Stutzens 1 gepreßt, nachdem sich die Klappe 11 in bezug auf die Klappe 8 gedreht hat.

Die Absperrung der Verbindung des Behälters mit der freien Luft während des Füllvorgangs ermöglicht es, im oberen Teil des Behälters, in den der Stutzen 3 mündet, eine Lufttasche zu halten, die verhindert, daß der Kraftstoff in diesem Stutzen aufsteigen kann und bei einem im Behälter herrschenden Überdruck, beim Parken auf einer schiefen Ebene oder in einer Kurve oder aber durch andere Ursachen nach draußen geworfen wird.

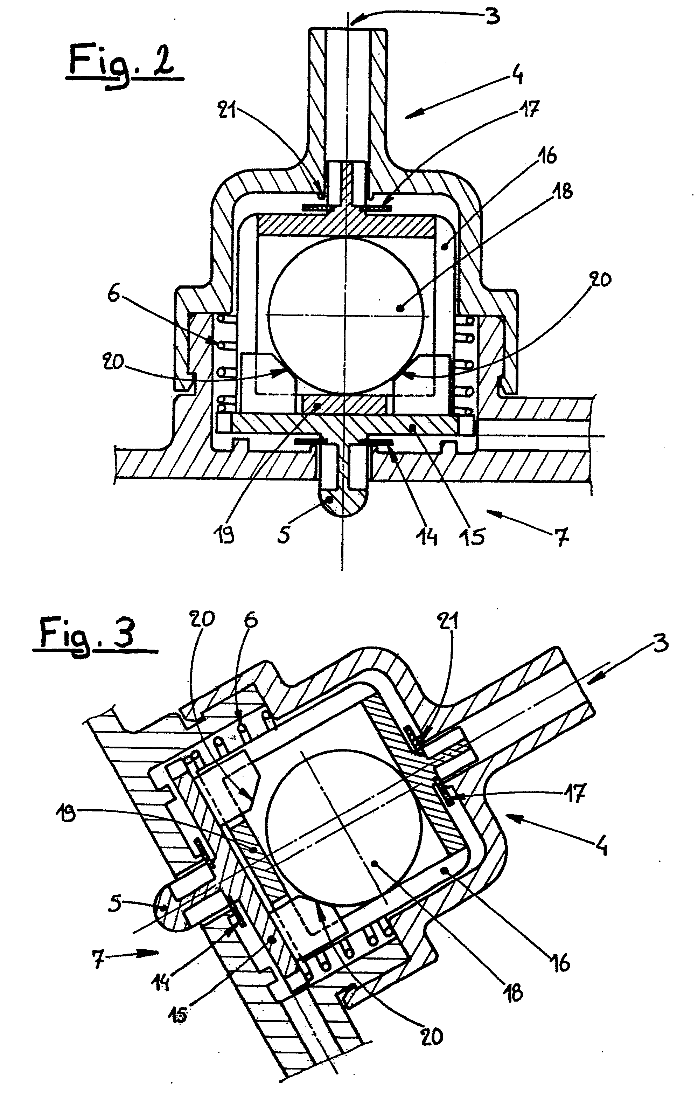

Es wird jetzt auf Figuren 2 und 3 Bezug genommen.

In normaler Arbeitsstellung nach Figur 2, d.h. während der Behälter nicht gefüllt wird, drückt die Feder 6 die Dichtung 14, fest mit dem Klappengehäuse 15 verbunden, aus dem der Stößel 5 herausragt, gegen ihren Sitz, wodurch die Dichtheit des Einfüllstutzens 1 gewährleistet wird.

Ein Käfig 16, der eine Dichtung 17 trägt, ist frei beweglich am Klappengehäuse 15 angebracht und enthält eine Kugel 18. In Ruhestellung ruht die Kugel 18 auf dem Boden 19 des Käfigs 16 und wird seitlich durch je eine mit dem Gehäuse 15 fest verbundene schiefe Ebene gehalten.

Das Gewicht der Kugel 18 stützt den Käfig 16 gegen das Klappengehäuse 15, und die Dichtung 17 wird aus ihrem Sitz am Eintritt des Stutzens 3 abgehoben (Fig. 1).

Bei einem Kippen des Fahrzeugs (Fig. 3) rollt die Kugel 18 auf einer der schiefen Ebenen und hebt dabei den Käfig 16 vom Klappengehäuse 15 so ab, daß die Dichtung 17 gegen ihren Sitz 21 zu liegen kommt und den Belüftungsstutzen 3 absperrt. Die Abdichtung mit dem Einfüllstutzen bleibt durch die Wirkung der Feder auf das Klappengehäuse 15 erhalten.

**Patentansprüche**

1. Sicherheits-Belüftungsvorrichtung gegen Überfüllung von Kraftstoffbehältern für Kraftfahrzeuge in einer Ausführung, bei der der Behälter mit der Atmosphäre während des Nichtfüllens verbunden ist durch einen Stutzen (3), der in den Behälter und darin in einer Lufttasche mündet, die ein Aufsteigen des Kraftstoffs in diesem Stutzen verhindert, und die ein Absperrventil (4) für den genannten Stutzen (3) umfaßt, dadurch gekennzeichnet, daß das genannte Ventil (4) geschlossen wird durch das Einschieben der Zapfpistole in den Füllansatz (2) des Kraftstoffbehälters.

2. Vorrichtung gemäß Anspruch 1, dadurch gekennzeichnet, daß das Absperrventil (4) geschlossen wird durch eine Klappe (11), die in Drehung fest verbunden ist mit einer Absperr- und Dichtungsklappe (8) des Behälters.

3. Vorrichtung gemäß Anspruch 2, dadurch gekennzeichnet, daß die Betätigungsklappe (11) des Absperrventils (4) an die Drehachse (12) der Absperr- und Dichtungsklappe (8) angelenkt ist und bis zu einer Anschlagstellung durch eine Feder (13) entfernt wird.

4. Vorrichtung gemäß Anspruch 3, dadurch gekennzeichnet, daß die Wegspreizfeder zwischen der Betätigungsklappe (11) und der Absperrklappe (8) gebildet wird durch einen Schenkel (13) einer Rückholfeder (10) der Absperrklappe (8) in Schließstellung.

5. Belüftungsvorrichtung gemäß einem der Ansprüche 1 bis 4, bei der das Absperrventil (4) eine Klappe (15) umfaßt, die durch eine Feder (6) gegen einen Sitz gedrückt wird und einen Stößel umfaßt, der der Wirkung der Zapfpistole ausgesetzt ist, dadurch gekennzeichnet, daß ein Käfig (16) versehen mit einer Dichtung (17), die mit einem Sitz (21) des Belüftungsstutzens (3) zusammenwirkt, an der genannten Klappe (15) gleitend angebracht ist und eine Kugel (18) enthält, die durch Schwerkraft auf schiefen Ebenen der genannten Klappe (15) sitzt.

**Claims**

1. A safety venting device to prevent overfilling of fuel tanks of motor vehicles, of the kind in which the tank is connected to the atmosphere during the non-filling condition by means of a connecting piece (3) which opens out inside the container in an air pocket which prevents the rise of the fuel in the connecting piece, and which comprises a shut-off valve (4) for the said connecting piece (3), characterized in that the said valve (4) is closed by the insertion of the filling nozzle in the filling attachment (2) of the fuel tank.

2. A device according to Claim 1, characterized in that the shut-off valve (4) is closed by a flap (11) which is pivotably connected permanently to a closing and sealing flap (8) of the tank.

3. A device according to Claim 2, characterized in that the control flap (11) of the shut-off valve (4) is articulated on the axis of rotation (12) of the closing and sealing flap (8), and is displaced to a stop position by a spring (13).

4. A device according to Claim 3, characterized in that the spreading spring between the control flap (11) and the closing flap (8) is formed by a leg (13) of a return spring (10) which returns the closing flap (8) into the closed position.

5. A venting device according to any one of Claims 1 to 4, in which the shut-off valve (4) comprises a flap (15) which is pressed against a seat by a spring (6), and which comprises a plunger, which is subject to the action of the filling nozzle, characterized in that a cage (16) provided with a seal (17) which cooperates with a seat (21) of the venting connecting piece (3) is slidably attached to the said flap (15) and contains a ball (18) which rests under the action of gravity on bevelled flat surfaces of the said flap (15).

**Revendications**

1. Dispositif de ventilation à sécurité contre le remplissage excessif pour réservoir de carburant pour véhicule automobile du type dans lequel ledit réservoir est relié, pendant le non-remplissage, à l'atmosphère par une tubulure (3) débouchant dans le réservoir dans une poche d'air évitant la remontée du carburant dans ladite tubulure, et comprenant une valve d'obturation (4) de ladite tubulure (3), caractérisé par le fait que ladite valve (4) est fermée par l'enfoncement du pistolet de carburant dans l'embout de remplissage (2) du réservoir de carburant.

2. Dispositif selon la revendication 1, caractérisé par le fait que la valve d'obturation (4) est fermée par un volet (11) solidaire en pivotement d'un volet (8) d'obturation et d'étanchéité du réservoir.

3. Dispositif selon la revendication 2, caractérisé par le fait que le volet de commande (11) de la valve d'obturation (4) est articulé sur l'axe de pivotement (12) du volet (8) d'obturation et d'étanchéité et en est écarté jusqu'à une position de butée par un ressort (13).

4. Dispositif selon la revendication 3, caractérisé par le fait que le ressort d'écartement entre le volet de commande (11) et le volet d'obturation (8) est formé par une branche (13) d'un ressort de rappel (10) du volet d'obturation (8) en position de fermeture.

5. Dispositif de ventilation selon l'une des revendications 1 à 4, dans lequel la valve d'obturation (4) comprend un clapet (15) rappelé contre un siège par un ressort (6) et comportant un poussoir soumis à l'action du pistolet de carburant, caractérisé par le fait qu'une cage (16) munie d'une garniture d'étanchéité (17) coopérant avec un siège (21) de la tubulure de ventilation (3) est montée coulissante sur ledit clapet (15) et contient une bille (18) logée par gravité sur des plans inclinés dudit clapet (15).

**EP 0 223 051 B1**

*Fig. 1*

EP 0 223 051 B1

Fig. 2

Fig. 3